# EUROPEAN PATENT SPECIFICATION

(11) **EP 1 625 884 B1**
(45) Date of publication and mention of the grant of the patent: **26.01.2011**
(21) Application number: 04254815.6
(22) Date of filing: 11.08.2004
(51) Int. Cl.: B01D 53/92, F01N 3/00, F01N 3/038, F01N 3/04

(54) **Device and method of reducing vehicular NOx emissions**
Vorrichtung und Verfahren zur Reduzierung der NOx-Emissionen von Kraftfahrzeugen
Dispositif et procédé de réduction des émissions de NOx de véhicules

(43) Date of publication of application: 15.02.2006
(73) Proprietor: Umicore AG & Co. KG, 63457 Hanau (DE)
(72) Inventor: Lahousse, Christophe, 6700 Arlon (LU)
(74) Representative: Jones, Keith William

(56) References cited:
- DE-A- 19 942 654
- GB-A- 1 396 839
- US-A- 3 664 134
- US-A- 3 683 626
- US-A- 3 817 715
- US-A1- 2003 115 857
- US-B1- 6 240 725

## Description

### Field of the Invention

The present invention relates to a NOₓ treatment system and in particular a system comprising a NOₓ trapping device and nitrate collection system according to the preamble of claim 4.

### Background of the Invention

Increasing regulatory controls on vehicle emissions have led to a growing interest in lean combustion as a means of limiting carbon dioxide emissions and reducing fuel consumption. In particular, the greater use of electronic engine management and direct injection or common rail injection has significantly improved the fuel consumption and carbon dioxide and hydrocarbon emissions of diesel and petrol engines. However, whilst these new technologies have dramatically reduced carbon dioxide emissions, the oxygen rich combustion environments employed therein, has led to an increase in NOₓ formation and emission.

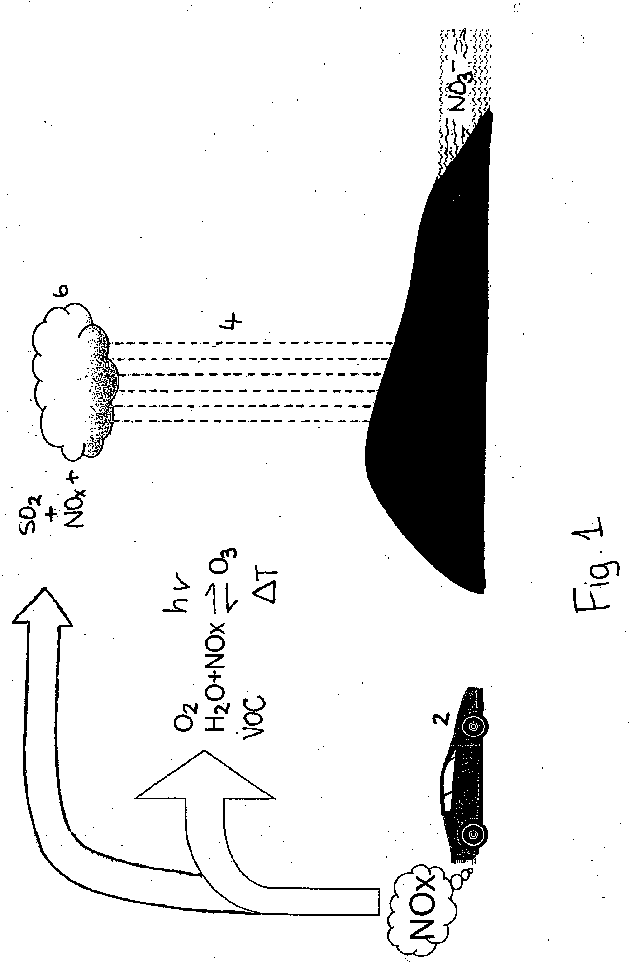

NOₓ is a generic name for nitrogen oxides (namely nitrogen monoxide and nitrogen dioxide) produced during combustion. Figure 1 shows the role of NO_{X} in the well-known model of the nitrogen cycle. Referring to Figure 1 it can be seen that the NOₓ emissions from a vehicle 2 have a number of detrimental effects on public health and the environment. For instance, NOₓ is a precursor to ozone and acid rain 4. In particular, ground-level ozone is formed when NOₓ and volatile organic compounds (VOCs) react under the stimulus of heat and sunlight. Similarly, acid rain 4 is formed when NOₓ and sulphur dioxide react with water vapour 6. When the acid rain 4 falls upon the ground 8, it forms nitrates by dissolving basic components in the earth. The nitrates then either remain in the ground 8 (where they act as a fertilisers) or enter the sea 10 or fresh-water supplies.

Traditional approaches to removing NOₓ from exhaust gases have focussed on chemically reducing NOₓ to diatomic nitrogen. However, the inherently oxidising environments produced during lean combustion makes the chemical reduction of NOₓ particularly difficult. Accordingly, conventional three-way catalytic converters are not generally effective in reducing NOₓ emissions under lean combustion conditions.

A number of approaches have been developed to overcome this problem, including lean NOₓ catalysts, NOₓ traps and selective catalytic reduction. These approaches will be briefly reviewed below.

### (a) Lean NOₓ catalysts

Lean NOₓ catalysts employ hydrocarbons (from fuel injected into the exhaust gas) to act as a reducing agent to convert NOₓ into diatomic nitrogen gas and water vapour. However, these catalysts typically operate over a very limited temperature range. Furthermore, platinum-based lean NOₓ catalysts have a tendency to convert NOₓ into N₂O, which is a potent greenhouse gas.

### (b) NOₓ Traps

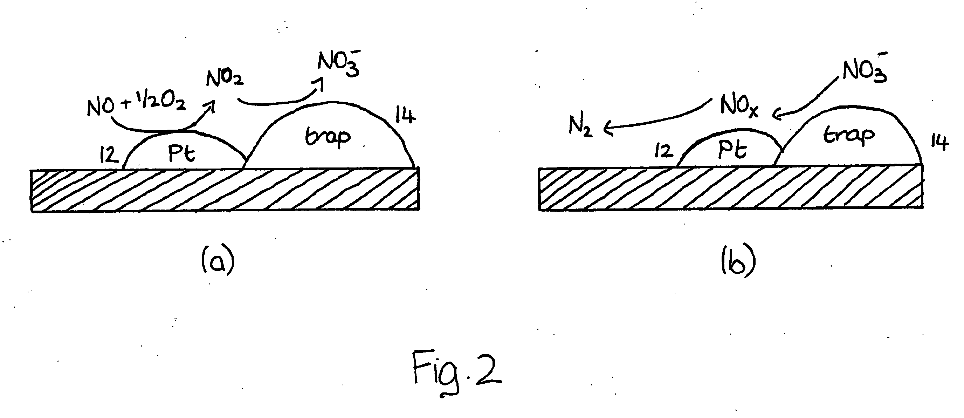

Unlike lean NOₓ catalysts (which continuously convert NOₓ into diatomic nitrogen gas), NOₓ traps typically store NOₓ under lean combustion conditions and release and catalytically reduce the stored NOₓ under rich combustion conditions. Figure 2(a) shows the operation of a NOₓ trap under lean combustion conditions and Figure 2(b) shows the operation of the NOₓ trap under rich combustion conditions.

Referring to Figure 2(a), in a first step an oxidation catalyst 12 (usually a precious metal such as platinum) accelerates the conversion of nitrogen monoxide in NOₓ emissions from an engine into nitrogen dioxide. Since nitrogen dioxide is an acidic oxide it can be readily trapped on a basic oxide. Accordingly, in a second step of the lean combustion operations of the NOₓ trap, the nitrogen dioxide generated in the first step is stored as a nitrate in an alkaline earth oxide metal (e.g. BaCO₃) site 14 adjacent to the oxidation catalyst 12.

Referring to Figure 2(b), during rich combustion conditions the NOₓ stored by the alkaline earth oxide metal 14 is removed from the NOₓ trap in a two-step reduction process. In particular, in a first step, rich combustion conditions are temporarily (i.e. for about 1-2 seconds) induced in the NOₓ trap by adding a pulsed charge of fuel to the exhaust gas. As a result, the stored NOₓ emissions are released from the alkaline earth oxide metal 14. The rich combustion operations also provide a suitable reduction environment for the operation of a conventional three-way catalytic converter (mounted downstream of the NOₓ trap). Accordingly, in a second step of the rich combustion operations of the NOₓ trap, the NOₓ released from the alkaline earth oxide metal 14 is reduced by the catalytic converter to diatomic nitrogen gas.

However, sulphur dioxide (SO₂) derived from sulphur in the injected fuel can react catalytically with oxygen and the alkaline earth oxide metal trapping sites 14, to form stable sulphates (BaSO₄) which reduce the adsorbing capabilities and thus NOₓ treating effectiveness of the NOₓ trap.

### (c) Selective Catalytic Reduction (SCR)

In SCR, a reduced nitrogen compound, usually ammonia or urea, is injected into exhaust gas in an amount proportional to the amount of NOₓ present therein. The NOₓ and the reduced nitrogen compound react in the presence of a catalyst (usually rhodium-based) to form elemental nitrogen and water vapour.

A complete SCR system comprises a urea tank and injector, a sensor, catalyst and control unit. Consequently, the implementation of SCR in a vehicle requires the inclusion of a considerable amount of additional hardware into the vehicle, thereby increasing its weight and fuel consumption and decreasing its manoeuvrability. Thus, whilst SCR has been successfully employed for reducing NOₓ emissions from stationary sources, it has proven considerably more difficult to implement in a mobile vehicle.

GB 1 396 839 discloses a system where exhaust gas is expanded and cooled prior to being sprayed with a caustic soda solution to remove NOₓ pollution.

US 3,683,626 describes a vehicular exhaust gas cleaning system in which particulate material and hydrocarbon are extracted using an aerosol of water and surfactant prior to removal of NOₓ using a calcium carbonate absorber.

US 3,817,715 describes a system where alkali metal salts are heated to melt then so that NOₓ is adsorbed.

US 3,664,134 discloses a system for powering a vehicle using acetylene where a CaOM slurry is used to scrub NOₓ.

### Summary of the Invention

According to the invention there is provided a method of reducing vehicular NOₓ emissions according to claim 1.

The invention further relates to a device according to claim 4.

Desirably, the alkaline earth metal catalyst contains zinc or tin or other d or f transition elements.

Desirably, the alkaline earth metal catalyst is deposited onto a support structure.

Preferably, the alkaline earth metal catalyst is provided in a honeycomb structure

Preferably, the alkaline earth metal catalyst is provided in a string array structure.

Preferably the NOₓ trapping device contains a reservoir of the alkaline earth metal catalyst sufficient to sustain the NOₓ trapping device for a distance of at least 240,000 km travelled by the vehicle.

Preferably, the NOₓ trapping device contains a refillable reservoir of the alkaline earth metal catalyst.

Preferably, the refillable reservoir is filled with pellets or a paste-like formulation of the alkaline earth metal catalyst.

Desirably, the alkaline earth metal catalyst formulation additionally contains binder and a texture modifier.

Desirably, the texture modifier includes clays, alumina, colloidal silica and colloidal alumina.

Preferably, the clays include bentonite, sepiolite or montmorillite either alone or in combination.

Preferably, the colloidal silica includes ludox™.

Desirably, the refillable reservoir is refilled with the alkaline earth metal catalyst with a piston device.

Preferably, the vehicular pollutant treatment system further comprises an in-vehicle storage device connectable to the vehicular NOₓ trapping device and an extra-vehicle storage device.

Desirably, the in-vehicle storage device stores an alkaline earth metal nitrate solution formed in the vehicular NOₓ trapping device.

Desirably, the in-vehicle storage device is disposed underneath the vehicular NOₓ trapping device and at one end of the vehicular NOₓ trapping device.

Preferably, the alkaline earth metal nitrate solution is stored in the bottom of the vehicular NOₓ trapping device.

Preferably, a liquid is enterable into the in-vehicle storage device through an inlet therein to wash the alkaline earth metal nitrate stored therein.

Desirably, the washings of the alkaline earth metal nitrate are drainable from the in-vehicle storage device into the extra-vehicular secondary storage device through an outlet from the in-vehicle storage device.

Desirably, the extra-vehicular secondary storage device is provided with a ventilation system to facilitate the evaporation of the liquid from the washings of the alkaline earth metal nitrate stored therein.

### Description and Drawings

The invention will now be described with reference to the accompanying drawings and table in which:
Figure 3a shows reactions occurring in the NOₓ trapping device during a hot phase of its operations;
Figure 3b shows reactions occurring in the e NOₓ trapping device during a cold phase of its operations;
Figure 4 according to the invention is a block diagram of an integration of the NOₓ trapping device shown in Figures 3a and 3b into a larger overall system for reducing pollutant emissions from an exhaust gas of an engine;
Figure 5 is a block diagram of a mechanism for refilling an alkaline earth metal catalyst of the NOₓ trapping device;
Figure 6 is a cross-section of the NOₓ trapping device wherein the alkaline earth metal catalyst is stored in pellet form;
Figure 7 is a diagram of an in-vehicle nitrate storage device;
Figure 8 is a diagram of the in-vehicle nitrate storage device shown in Figure 7, connected to an extra-vehicle secondary nitrate storage system; and
Table 1 shows the following characteristics of the alkaline earth metal catalyst
   (a) oxide, carbonate and nitrate solubility;
   (b) nitrate decomposition temperature; and
   (c) weight of alkaline earth metal catalyst consumed per 10,000 km travelled by a vehicle employing the NOₓ trapping device.

### 1. Overview

The NOₓ treatment system comprises the following elements:
(a) a NOₓ trapping device comprising an alkaline earth metal catalyst reserve (which may be refillable) and an optional support structure;
(b) a controller for the NOₓ trapping device; and
(c) a nitrate disposal/evacuation system (i.e. gas normal disposal and/or several holes in the NOₓ trapping device) or a nitrate storage system.

The following description will be divided into two sections. The first section will focus on the NOₓ trapping device of the first and second embodiments of the NOₓ treatment system. The second section will focus on the nitrate storage system of the third embodiment of the NOₓ treatment system.

In particular, the first section will discuss the principles of operation of the NOₓ trapping device and the properties of the catalyst materials used therein. The first section will also discuss how the NOx trapping device may be integrated into a larger overall system for treating vehicular pollutant emissions. The first section will finish with a discussion of the refillable version (second embodiment) of the NOₓ trapping device. The second section will discuss the in-vehicle and extra-vehicle components of the nitrate storage system.

### 2. NOₓ Trapping Device

### (a) Operation of the NOₓ Trapping Device

The present invention inverts the traditional chemical reduction model for treating NO_{X} emissions and instead employs a chemical oxidation process to convert the NOₓ into a harmless nitrate. The nitrate is then dissolved in combustion water for subsequent evacuation or storage.

The operation of the NOₓ trapping device can be divided into two distinct phases, namely a hot phase and a cold phase. These phases are related to the operation of the engine whose exhaust gases the NOₓ trapping device is treating. The hot phase occurs during the normal steady state operations of the engine (i.e. when the engine is hot) and the cold phase is performed during the start-up of the engine (i.e. when the engine is cold).

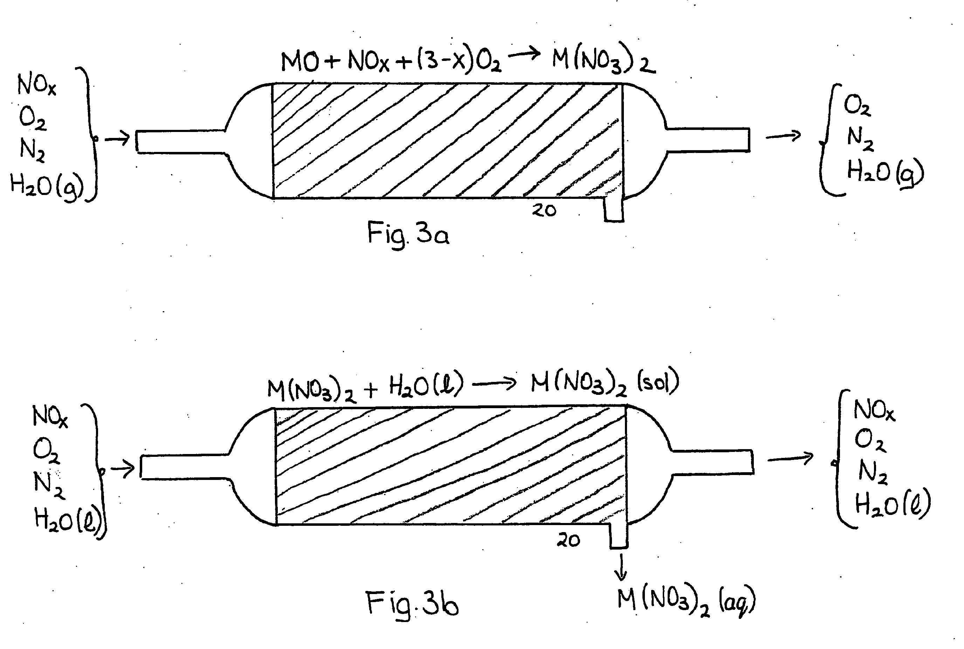

Referring to Figure 3a, during the hot phase operations, NOₓ emissions from an engine (not shown) are oxidised to form nitrogen dioxide and trapped as a nitrate (M(NO₃)₂) upon an alkaline earth metal (M). Referring to Figure 3b, during the cold phase operations, condensed water vapour from the engine exhaust gas dissolves the trapped alkaline earth metal nitrate (M(NO₃)₂) to form a nitrate solution (M(NO₃)₂₍ₛₒₗ₎).

The geometric and/or specific area of the alkaline earth metal catalyst (M) and the flow distribution therethrough determines the trapping efficiency of the NOₓ trapping device 20. The thickness of the alkaline earth metal catalyst (M) also determines the duration of the trapping period therein.

### (b) Catalyst Employed in the NOₓ Trapping Device

The alkaline earth metal catalyst material employed in a NOₓ trapping device 20 includes calcium and magnesium.

However, there are two main factors to be considered when selecting a particular alkaline earth metal catalyst (M) for the NOₓ trapping device 20. The first factor relates to the solubility properties of the oxides and carbonates of the selected alkaline earth metal catalyst (M) and the second factor relates to the thermal stability of the nitrates of the selected alkaline earth metal catalyst (M).

Looking at the first of the above factors, the oxides and carbonates of the alkaline earth metal catalyst (M) should not be soluble in water. This condition prevents the loss of the alkaline earth metal catalyst (M) through the dissolution of the oxides and carbonates thereof (formed by the reaction of the alkaline earth metal catalyst (M) with water and carbon dioxide in the exhaust gas) in combustion water during the cold phase operations of the NOₓ trapping device 20.

Turning to the second of the above factors, the alkaline earth metal catalyst nitrates must be soluble in water (to facilitate the cold phase dissolution process) and stable at the elevated temperatures produced during the normal steady state operations of an engine (i.e. during the hot phase operations of the NOₓ trapping device 20).

Bearing the above factors in mind, the optimal alkaline earth metal catalysts for the NOₓ trapping device 20 include calcium and magnesium.

The dissolution of the alkaline earth metal nitrate (M(NO₃)₂₍ₛₒₗ₎) and subsequent evacuation from the NOₓ trapping device 20 (during the cold phase operations thereof) leads to the gradual consumption of the alkaline earth metal catalyst (M) in the NOₓ trapping device 20. Accordingly, a reserve of the alkaline earth metal catalyst (M) must be included in the NOₓ trapping device 20 to facilitate the long-term operation of the device.

As previously discussed in relation to the prior art NOₓ treatment systems, one of the main design considerations in implementing such systems in a mobile vehicle is the weight of the NOₓ treatment system. In particular, the NOₓ treatment system should not considerably add to the weight of the vehicle. Since the inclusion of an alkaline earth metal reserve into the present NOₓ trapping device 20 will add to the weight of the device, another major consideration in selecting an appropriate alkaline earth metal catalyst (M) is the weight of the alkaline earth metal catalyst (M) consumed per unit distance travelled by a vehicle employing the NOₓ trapping device 20.

Referring to Table 1, it can be seen that the weight of calcium and magnesium consumed per kilometre travelled by a vehicle is considerably less than that of barium. However, barium and calcium are considerably more thermo-stable than magnesium. Accordingly, bearing in mind all of the above considerations regarding the operating conditions of the NOₓ trapping device 20, the optimal alkaline earth metal catalyst (M) for the NOₓ trapping device 20 is a mixture of calcium and magnesium and the present invention is restricted to the mixture.

Catalysts are often deposited onto honeycomb support structures to improve the geometric/spatial stability of the catalysts and the flow of the substrate therethrough. In order to reduce the weight of the NOₓ trapping device 20 the alkali earth metal catalyst (M) employed therein may not be deposited onto a support structure. Instead, the alkaline earth metal catalyst (M) could itself be provided in a honeycomb or foam-like structure. However, the honeycomb or foam-like structure of the catalyst would probably be damaged by the dissolution of the alkaline earth metal nitrate (M(NO₃)₂) during the afore-mentioned cold phase operation of the NOₓ trapping device 20. This process could rapidly reduce the honeycomb or foam-like structure of the alkaline earth metal catalyst (M) to a powder.

To overcome this problem the alkaline earth metal catalyst (M) could also be provided as a bulky honeycomb substrate in which a metallic support would be embedded to provide an anchoring. One shape possibility for this embedded support would be an array of metallic string. The system would differ from a conventional washcoated honeycomb structure in its relative thickness. The NOx trap material thickness initially provided would indeed by far exceed support thickness which is direct contrast with conventional coated catalyst. Zinc, strontium and other d or f transition elements may also be added to the alkaline earth metal catalyst composition to provide some catalytic redox properties useful for the trapping of NOₓ gases during the hot-phase operation of the NOₓ trapping device 20.

### (c) Integration of NOₓ Trapping Device into General Pollutant Treatment System

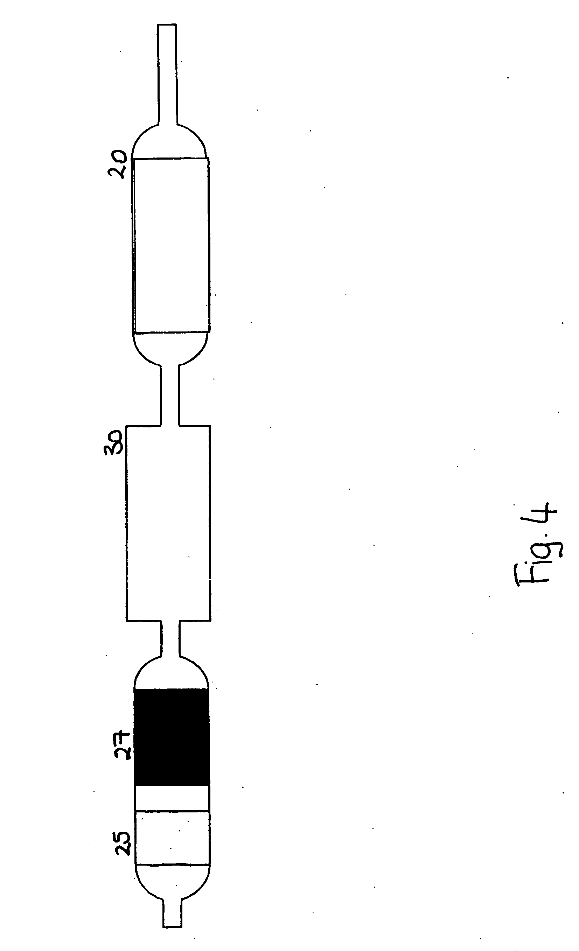

Referring to Figure 4, the NOₓ trapping device 20 may be integrated into a larger overall vehicular pollutant treatment system comprising a diesel oxidation catalyst 25 and a particulate filter 27. The NOₓ trapping device 20 should be located in a cold section of the exhaust line (preferably after the muffler 30) to facilitate the condensation of combustion water for the cold-phase operations of the NOₓ trapping device 20.

### (d) Refillable NOₓ Trapping Device

Referring to Table 1 it can be seen that approximately 1.1 kg of magnesium and 1.6 Kg of calcium are consumed per 10,000 km travelled by a vehicle employing the NOx trapping device. Assuming that the lifetime of a vehicle can be represented as a travelling distance of 240,000 km, the weight of the calcium and magnesium mixture required to supply the NOₓ trapping device 20 for the entire lifetime of a vehicle is approximately 32 Kg.

Similarly, it has also been calculated that in order to convert a Euro 4 compliant vehicle to a Euro 5 compliant vehicle(e.g. achieving 0.08g/km NOx emissions), 1.5 kg of the calcium and magnesium mixture will be required for 10 000 km travelled by the vehicle.

Regardless of which of the above options is being considered, the inclusion of sufficient alkaline earth metal catalyst material to sustain the NOₓ trapping device considerably adds to the overall weight of a vehicle. To overcome this problem, a second embodiment of the NOₓ trapping device includes a refillable alkaline earth metal reservoir. This ensures that the NOₓ trapping device does not have to store calcium and magnesium reserves of sufficient weight to sustain the NO_{X} trapping device for the entire lifetime of the vehicle. The second embodiment of the NOₓ trapping device will be described in more detail below.

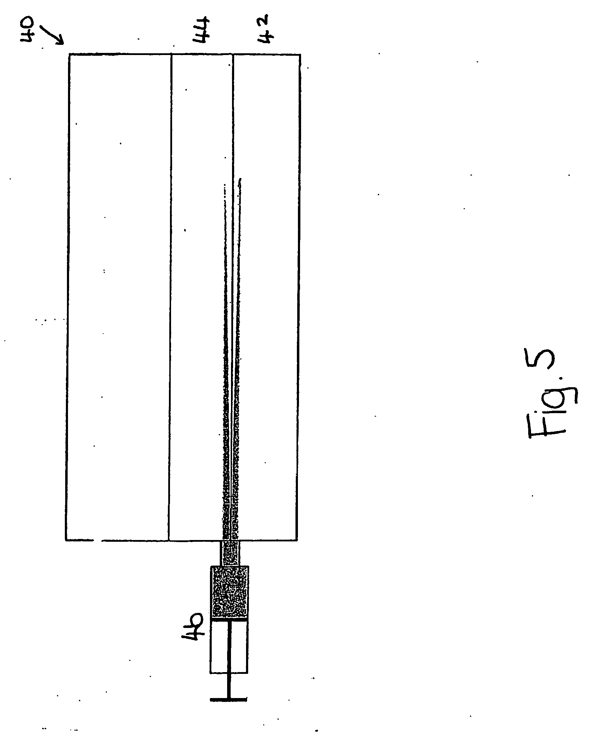

Referring to Figure 5, the NOₓ trapping device 20 comprises a refillable reservoir 40 of alkaline earth metal catalyst (M) in which the alkaline earth metal catalyst (M) is deposited onto an embedded support material 42 which is turn deposited onto an anchoring material 44. The alkaline earth metal catalyst stored in the reservoir 40 is provided in a paste-like formulation that may additionally include binder and a texture modifier (including clays (bentonite, sepiolite, montmorillonite) and colloidal silica and alumina (e.g. ludox)). In use, the reservoir 40 may be refilled with the paste-like alkaline earth metal catalyst with a piston device 46.

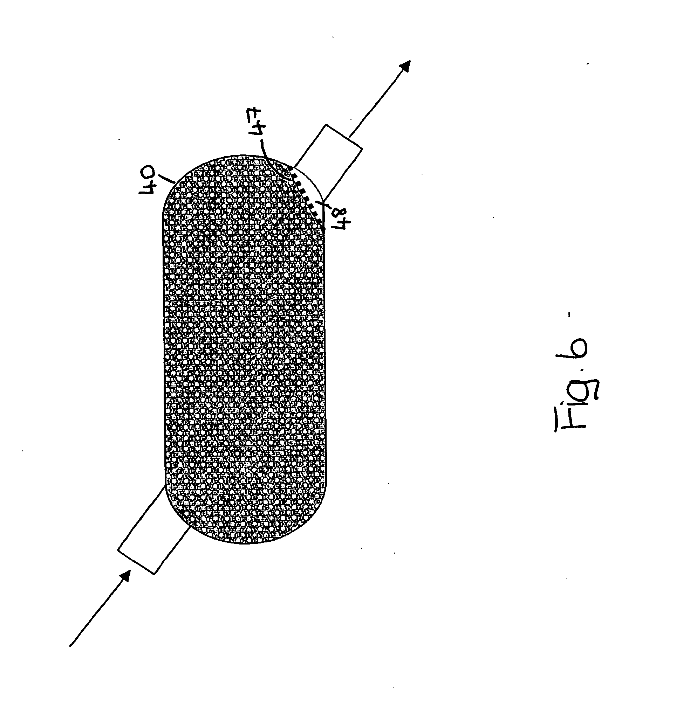

Referring to Figure 6, a further embodiment of the NOx trapping device with a refillable catalyst reservoir 40 includes the alkaline earth metal catalyst (M) in pellet form 47 in a canning 48 close to the bottom of the reservoir. This embodiment provides a simpler mechanism for refilling the reservoir, since pellets of the alkaline earth metal catalyst can be readily added to the reservoir 40 without the requirement for the piston system to pump the paste-like formulation into the reservoir.

### 3. Nitrate Storage System

### (a) Overview

Rather than disposing of the alkaline earth metal nitrate solution (M (NO₃)₂₍ₛₒₗ₎) (formed during the cold phase operations of the NOₓ trapping device) directly into the environment, the third embodiment of the NOₓ treatment system includes a nitrate storage system. The nitrate storage system comprises an in-vehicle storage device for collecting the nitrate solution and a system for draining the stored nitrate solution into a secondary storage device located in a service station or other extra-vehicular site. The nitrates collected in the secondary storage device can then be treated and/or sold to other industries for the manufacture of fertilisers or explosive materials.

Both the in-vehicle storage device and the secondary storage device will be described in more detail below.

### (b) In-vehicle Storage Device

The alkaline earth metal nitrate solution (M(NO₃)₂₍ₛₒₗ₎) formed in the NOₓ trapping device may either be collected in the bottom of the NOₓ trapping device or in a separate storage device disposed underneath the NOₓ trapping device.

The main advantage of storing the alkaline earth metal nitrate solution (M(NO₃)₂₍ₛₒₗ₎) in the bottom of the NOₓ trapping device is that it eliminates the need for additional hardware in the NOₓ treatment system. This may considerably reduce the size of the NOₓ treatment system compared with the alternative of providing a separate storage device therefor. However, the main disadvantage of this approach is that the alkaline earth metal catalyst in the bottom of the NOₓ trapping device will be rapidly covered by the nitrate solution. This will lead to variable rates of consumption of the alkaline earth metal catalyst (by the dissolution process of the cold phase operations of the NOₓ trapping device) throughout the NOₓ trapping device and will, in effect, lead to the progressive deterioration of the performance of the NOₓ trapping device in the intervals between the draining of the nitrate solution into the secondary storage device.

If the alkaline earth metal nitrate solution (M(NO₃)₂₍ₛₒₗ₎) is collected in a separate storage device located underneath the NOₓ trapping device, the storage device must be specifically located at one of the two ends of the NOₓ trapping device. In particular, the separate storage device should preferably be located at the rear of the NOₓ trapping device to avoid the risk of the engine exhaust gas entirely bypassing the NOₓ trapping device. Bearing in mind that the separate storage device must be located at one of the two ends of the NOₓ trapping device, the main disadvantage of this approach to collecting the alkaline earth metal nitrate solution (M (NO₃)₂₍ₛₒₗ₎) is the need for an appropriate liquid transport system to ensure that the nitrate solution formed at both ends (and the rest of the body) of the NOₓ trapping device is transported to the storage device.

The following description of the in-vehicle storage device will focus on the first of the two above-described devices. In particular, the following discussion will describe a system wherein the alkaline earth metal nitrate solution (M(NO₃)₂₍ₛₒₗ₎) formed in a NOₓ trapping device is collected and drained from the bottom thereof. It will nonetheless be appreciated that the present invention is not limited to this in-vehicle storage system, but instead, also embraces the collection of the alkaline earth metal nitrate solution (M(NO₃)₂₍ₛₒₗ₎) in a separate storage device as described above.

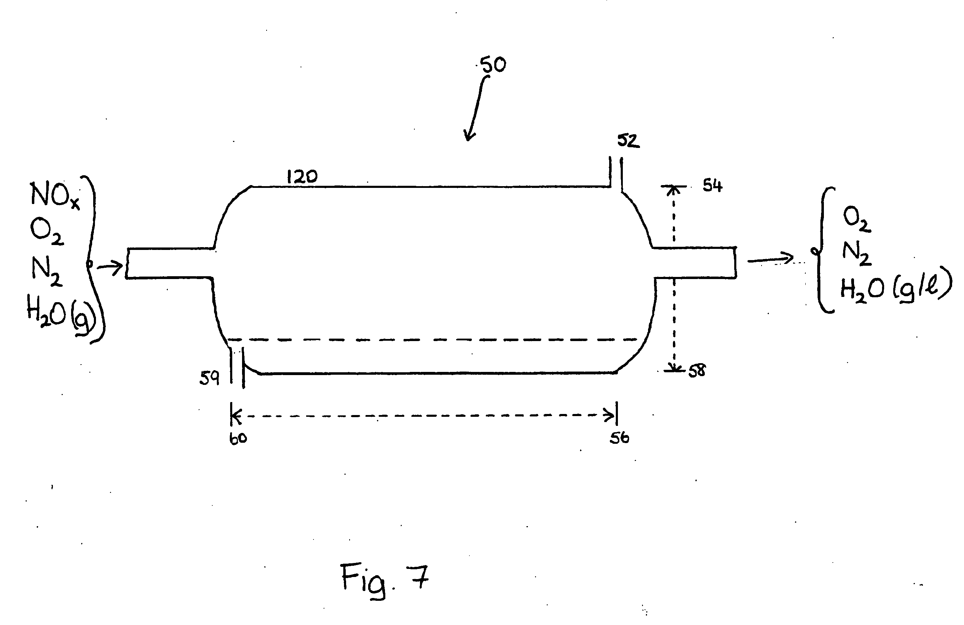

Referring to Figure 7, the in-vehicle storage device 50 comprises a NOₓ trapping device 120 whose top 54 is provided with an inlet 52 located at a first end 56 thereof. The bottom 58 of the NOₓ trapping device 120 is further provided with an outlet 59 located at the opposing end 60 of the NOₓ trapping device 120. The in-vehicle storage device 50 may also comprise nitrate storage canning.

In use, the alkaline earth metal nitrate solution (M (NO₃)₂₍ₛₒₗ₎) formed during the cold phase operations of the NOₓ trapping device 20 is collected in the bottom 58 thereof. However, as the vehicle is driven for a distance and its engine heats up, the aqueous nitrate solution evaporates to form a crystalline salt of the alkaline earth metal nitrate that remains in the bottom 58 of the NOₓ trapping device 20. Since, for example, calcium nitrate weighs more than a calcium oxide catalyst material, the calcium nitrate crystals collected over a distance of 20,000 km travelled by a vehicle adds approximately 6.2 kg to the weight of the NOₓ treatment system.

To ensure that exhaust gas does not bypass the NOₓ trapping device 20, the inlet 52 and outlet 59 are maintained in a closed state until opened to drain the stored alkaline earth metal nitrate into the extra-vehicular secondary storage device.

Furthermore, to ensure nitrate retention during the normal hot phase operations of the NOₓ trapping device, the inlet 52 and outlet 59 tubes may be closed with a tap.

Alternatively, a simple spill-over system may be employed in which the outlet 59 extends for a pre-defined distance into the bottom of the NOₓ trapping device 20. This ensures that if the NOₓ trapping device is not regularly drained and the accumulated alkaline earth metal nitrate exceeds the pre-defined height (i.e. the distance which the outlet 59 extends into the NOₓ trapping device 20), the nitrate spills out of the NOₓ treatment system onto the road/ground etc. Accordingly, the advantage of this approach is improved nitrate dissolution during collection. However, the main drawback of this approach is the emission of the buffer water vapour when the vehicle is re-started after cleaning.

### (c) Secondary Nitrate Storage System

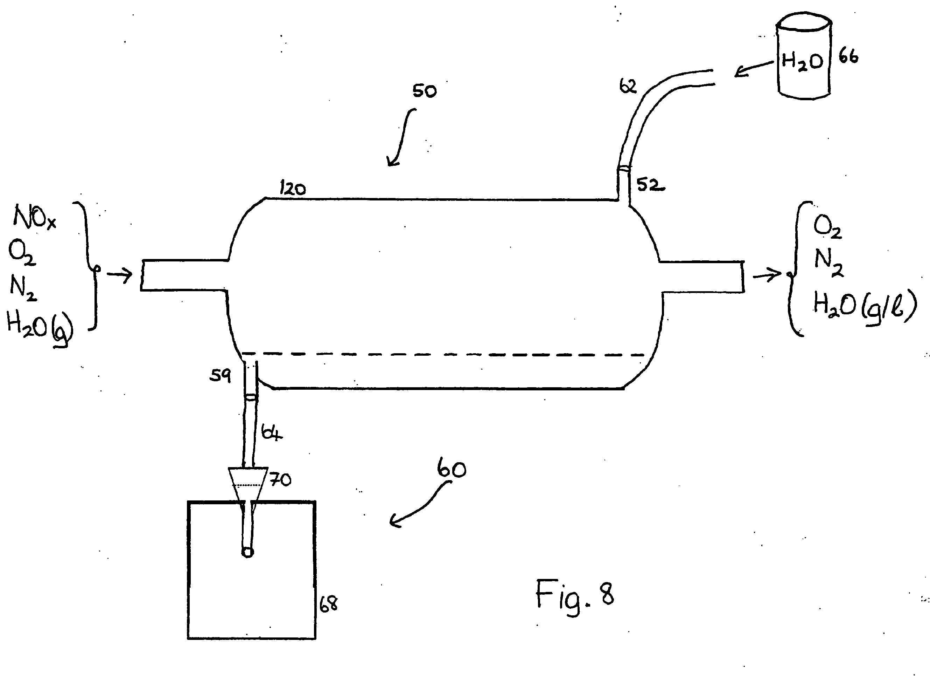

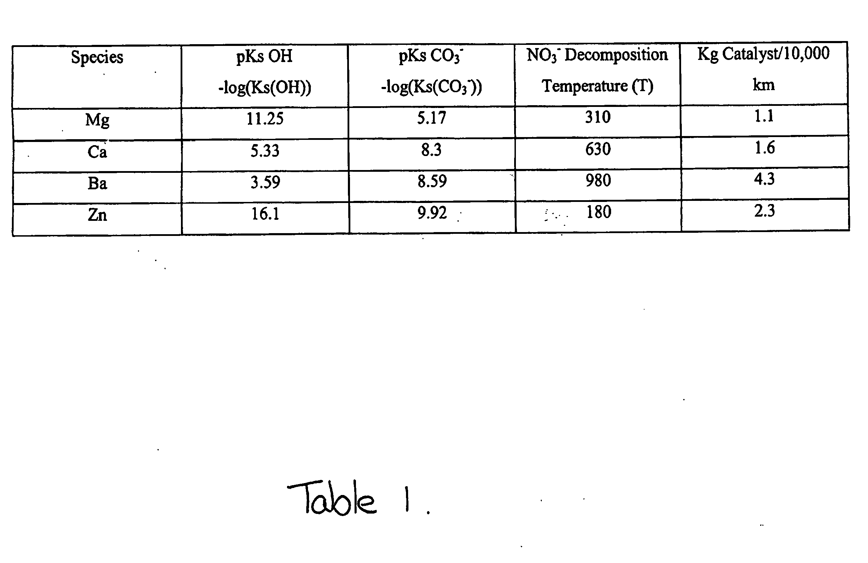

Referring to Figure 8, the secondary nitrate storage system comprises two tubes 62, 64, a water source 66 and a secondary storage tank 68. The first tube 62 is connectable at one end to the water source 66 and at the other end to the inlet 52 of the in-vehicle nitrate storage device 50. The second tube 64 is connectable at one end to the outlet 59 of the in-vehicle nitrate storage device 50 and at the other end to the secondary storage tank 68.

In use water is poured from the water source 66 through the first tube 62 and the inlet 52 into the NOₓ trapping device 20. The water dissolves the dried alkaline earth metal nitrate crystals stored in the bottom of the NOₓ trapping device 20 and the resulting aqueous alkaline earth metal nitrate (M(NO₃)_{2(aq)}) is drained from the NOₓ trapping device 20 through the outlet 59 and the second tube 64. This arrangement requires comparatively little manpower to implement.

To be re-used the alkaline earth metal nitrate M(NO₃)₂ must be comparatively pure. Whilst soot does not usually contaminate the alkaline earth metal nitrate solution M(NO₃)₂₍ₛₒₗ₎ and alkaline earth metal nitrate crystals stored in the bottom of the NOₓ trapping device 20, soot may nonetheless contaminate the aqueous alkaline earth metal nitrate (M (NO₃)_{2(aq)}) on transfer from the in-vehicle nitrate storage device 50 to the secondary storage tank 68 and subsequent storage therein. Accordingly, the secondary storage tank 68 may be provided with a filter 70 to reduce the risk of contamination of the aqueous alkaline earth metal nitrate (M(NO₃)_{2(aq)}) stored in the secondary storage tank 68 by soot, ash, rust or other particulates.

Furthermore, since the dry crystalline form of the alkaline earth metal nitrate M(NO₃)₂ powder is typically considerably lighter than the aqueous form thereof (M (NO₃)_{2(aq)}) , the secondary storage tank 68 may be provided with a ventilation system to promote evaporation of the collected aqueous alkaline earth metal nitrate (M(NO₃)_{2(aq)}), so that the resulting dry alkaline earth metal nitrate crystals may be more easily transported to their eventual user.

## Claims

1. A method of reducing vehicular NOₓ emissions using a system according to claim 4 **characterised in that** the method comprises the steps of:
(a) oxidising NOₓ to form nitrogen dioxide;
(b) reacting the nitrogen dioxide with an alkaline earth metal (M) to form the alkaline earth metal nitrate (M(NO₃)₂) wherein the alkaline earth metal comprises a mixture of calcium and magnesium, wherein steps (a) and (b) are enabled by a heat generated from an engine of the vehicle when the engine is in operation, and the method comprises the further step of dissolving the metal nitrate in combustion water and wherein dissolution of the metal nitrate is performed at the startup of the vehicle engine.

2. A method of treating vehicular NOₓ emissions comprising the steps of reducing vehicular NOₓ emissions as claimed in Claim 1 **characterised in that** the method comprises the further steps of:
(d) storing the alkaline earth metal nitrate solution (M(NO₃)₂₍ₛₒₗ₎) in an in-vehicle storage device; and
(e) washing the alkaline earth metal nitrate (M(NO₃)₂) from the in-vehicle storage device into an extra-vehicular secondary storage device (68).

3. A method of treating vehicular NOₓ emissions as claimed in Claim 2 wherein the method includes the further step of evaporating the water from the aqueous alkaline earth metal nitrate (M(NO₃)_{2(aq)}) stored in the extra-vehicular secondary storage device (68).

4. A vehicle pollutant treatment system comprising a diesel oxidation catalyst (25), a particulate filter (27), and a NOₓ trapping device (20) comprising an alkaline earth metal catalyst (M) comprising a mixture of calcium and magnesium, **characterised in that** the NOₓ trapping device (20) being located downstream of the diesel oxidation catalyst (25) in the cold section of the exhaust line and being adapted to allow the condensation of combustion water during cold phase operations such that metal nitrate (M(NO₃)₂) is dissolved in the combustion water for subsequent evacuation or storage.

5. The vehicle pollutant treatment system as claimed in claim 4 wherein the NOₓ trapping device is located after the muffler.

6. A vehicle pollutant treatment system as claimed in Claim 4 or 5 wherein the alkaline earth metal catalyst (M) contains zinc or tin or other d or f transition elements.

7. A vehicle pollutant treatment system as claimed in any of Claims 4 to 6 wherein the alkaline earth metal catalyst (M) is deposited onto a support structure (42).

8. A vehicle pollutant treatment system as claimed in any of Claims 4 to 6 wherein the alkaline earth metal catalyst (M) is provided in a honeycomb structure.

9. A vehicle pollutant treatment system as claimed in any of Claims 4 to 8 wherein the alkaline earth metal catalyst (M) is provided in a honeycomb structure comprising a metallic support.

10. A vehicle pollutant treatment system as claimed in any of Claims 4 to 9 wherein the vehicular NOₓ trapping device (20) contains a refillable reservoir (40) of the alkaline earth metal catalyst (M), and wherein the refillable reservoir (40) is filled with pellets or a paste-like formulation of the alkaline earth metal catalyst (M), and wherein the alkaline earth metal catalyst (M) formulation additionally contains binder and a texture modifier, wherein the texture modifier includes clays, alumina, colloidal silica and colloidal alumina.

11. A vehicle pollutant treatment system as claimed in Claim 10 wherein the clays include bentonite, sepiolite or montmorillonite either alone or in combination.

12. A vehicle pollutant treatment system as claimed in any one of claims 4 to 11 comprising an in-vehicle storage device connectable to the NOₓ trapping device (20) and an extra-vehicular storage device (68).

13. A vehicle pollutant treatment system as claimed in Claim 12 wherein the in-vehicle storage device stores an alkaline earth metal nitrate solution (M(NO₃)₂₍ₛₒₗ₎) formed in the vehicular NOₓ trapping device (20).

14. A vehicle pollutant treatment system as claimed in Claim 12 or 13 wherein the in-vehicle storage device is disposed underneath the NOₓ trapping device (20) and at one end of the NOₓ trapping device (20).

15. A vehicle pollutant treatment system as claimed in any of Claims 12 to 14 wherein the extra-vehicular secondary storage device (68) is provided with a ventilation system to facilitate the evaporation of the liquid from the washings of the alkaline earth metal nitrate (M(NO₃)_{2(aq)}) stored therein.

## Patentansprüche

1. Ein Verfahren zum Reduzieren von NOₓ-Emissionen von Fahrzeugen, das ein System gemäß Anspruch 4 verwendet, **dadurch gekennzeichnet, dass** das Verfahren die folgenden Schritte beinhaltet:
(a) Oxidieren von NOₓ, um Stickstoffdioxid zu bilden;
(b) Reagierenlassen des Stickstoffdioxids mit einem Erdalkalimetall (M), um das Erdalkalimetallnitrat (M(NO₃)₂) zu bilden, wobei das Erdalkalimetall eine Mischung von Calcium und Magnesium beinhaltet,
wobei die Schritte (a) und (b) durch eine Wärme, die von einem Motor des Fahrzeugs erzeugt wird, wenn sich der Motor in Betrieb befindet, ermöglicht werden, und wobei das Verfahren den weiteren Schritt des Auflösens des Metallnitrats in Verbrennungswasser beinhaltet und wobei die Auflösung des Metallnitrats beim Anlassen des Fahrzeugmotors durchgeführt wird.

2. Ein Verfahren zum Aufbereiten von NOₓ-Emissionen von Fahrzeugen, das die Schritte des Reduzierens von NOₓ-Emissionen von Fahrzeugen gemäß Anspruch 1 beinhaltet, **dadurch gekennzeichnet, dass** das Verfahren die folgenden weiteren Schritte beinhaltet:
(d) Speichern der Erdalkalimetallnitrat-Lösung (M(NO₃)₂₍ₛₒₗ₎) in einer fahrzeuginternen Speichervorrichtung und
(e) Waschen des Erdalkalimetallnitrats (M(NO₃)₂) aus der fahrzeuginternen Speichervorrichtung in eine fahrzeugexterne sekundäre Speichervorrichtung (68).

3. Verfahren zum Aufbereiten von NOₓ-Emissionen von Fahrzeugen gemäß Anspruch 2, wobei das Verfahren den weiteren Schritt des Evaporierens des Wassers aus dem in der fahrzeugexternen sekundären Speichervorrichtung (68) gespeicherten wässrigen Erdalkalimetallnitrat (M(NO₃)_{2(aq)}) umfasst.

4. Ein Fahrzeugschadstoffaufbereitungssystem, das einen Dieseloxidationskatalysator (25), ein Rußpartikelfilter (27) und eine NOₓ-Auffangvorrichtung (20) beinhaltet, die einen Erdalkalimetallkatalysator (M) beinhaltet, welcher eine Mischung von Calcium und Magnesium beinhaltet, **dadurch gekennzeichnet, dass** sich die NOₓ-Auffangvorrichtung (20) stromabwärts von dem Dieseloxidationskatalysator (25) in dem kalten Abschnitt des Abgasstrangs befindet und angepasst ist, um die Kondensation von Verbrennungswasser während Kaltphasenbetriebsvorgängen zu erlauben, so dass Metallnitrat (M(NO₃)₂) zur anschließenden Entleerung oder Speicherung in dem Verbrennungswasser aufgelöst wird.

5. Fahrzeugschadstoffaufbereitungssystem gemäß Anspruch 4, wobei sich die NOₓ-Auffangvorrichtung hinter dem Dämpfer befindet.

6. Fahrzeugschadstoffaufbereitungssystem gemäß Anspruch 4 oder 5, wobei der Erdalkalimetallkatalysator (M) Zink oder Zinn oder andere d- oder f-Übergangselemente enthält.

7. Fahrzeugschadstoffaufbereitungssystem gemäß einem der Ansprüche 4 bis 6, wobei der Erdalkalimetallkatalysator (M) auf einer Stützstruktur (42) abgelagert ist.

8. Fahrzeugschadstoffaufbereitungssystem gemäß einem der Ansprüche 4 bis 6, wobei der Erdalkalimetallkatalysator (M) in einer Wabenstruktur bereitgestellt ist.

9. Fahrzeugschadstoffaufbereitungssystem gemäß einem der Ansprüche 4 bis 8, wobei der Erdalkalimetallkatalysator (M) in einer Wabenstruktur bereitgestellt ist, die eine metallische Stütze beinhaltet.

10. Fahrzeugschadstoffaufbereitungssystem gemäß einem der Ansprüche 4 bis 9, wobei die NOₓ-Auffangvorrichtung (20) des Fahrzeugs einen nachfüllbaren Behälter (40) des Erdalkalimetallkatalysators (M) enthält und wobei der nachfüllbare Behälter (40) mit Pellets oder einer pastenartigen Formulierung des Erdalkalimetallkatalysators (M) gefüllt ist und wobei die Formulierung des Erdalkalimetallkatalysators (M) zusätzlich ein Bindemittel und ein Texturmodifikationsmittel enthält, wobei das Texturmodifikationsmittel Tonböden, Aluminiumoxid, kolloidales Siliciumdioxid und kolloidales Aluminiumoxid umfasst.

11. Fahrzeugschadstoffaufbereitungssystem gemäß Anspruch 10, wobei die Tonböden Bentonit, Sepiolit oder Montmorillonit, entweder allein oder in Kombination, umfassen.

12. Fahrzeugschadstoffaufbereitungssystem gemäß einem der Ansprüche 4 bis 11, das eine fahrzeuginterne Speichervorrichtung , die mit der NOₓ-Auffangvorrichtung (20) verbunden werden kann, und eine fahrzeugexterne Speichervorrichtung (68) beinhaltet.

13. Fahrzeugschadstoffaufbereitungssystem gemäß Anspruch 12, wobei die fahrzeuginterne Speichervorrichtung eine in der NOₓ-Auffangvorrichtung (20) des Fahrzeugs gebildete Erdalkalimetallnitrat-Lösung (M(NO₃)₂₍ₛₒₗ₎) speichert.

14. Fahrzeugschadstoffaufbereitungssystem gemäß Anspruch 12 oder 13, wobei die fahrzeuginterne Speichervorrichtung unterhalb der NOₓ-Auffangvorrichtung (20) und an einem Ende der NOₓ-Auffangvorrichtung (20) angeordnet ist.

15. Fahrzeugschadstoffaufbereitungssystem gemäß einem der Ansprüche 12 bis 14, wobei die fahrzeugexterne sekundäre Speichervorrichtung (68) mit einem Ventilationssystem versehen ist, um die Evaporation der Flüssigkeit aus den Waschungen des darin gespeicherten Erdalkalimetallnitrats (M(NO₃)_{2(aq)}) zu erleichtern.

## Revendications

1. Un procédé de réduction des émissions de NOₓ de véhicule à l'aide d'un système selon la revendication 4 **caractérisé en ce que** le procédé comprend les étapes de :
(a) oxyder les NOₓ afin de former du dioxyde d'azote ;
(b) faire entrer en réaction le dioxyde d'azote avec un métal alcalinoterreux (M) afin de former le nitrate métallique alcalinoterreux (M(NO₃)₂), où le métal alcalinoterreux comprend un mélange de calcium et de magnésium,
où les étapes (a) et (b) sont rendues possibles par une chaleur générée depuis un moteur du véhicule lorsque le moteur est en fonctionnement, et le procédé comprend l'étape supplémentaire de dissoudre le nitrate métallique dans de l'eau de combustion et où la dissolution du nitrate métallique est réalisée à la mise en route du moteur de véhicule.

2. Un procédé de traitement des émissions de NOₓ de véhicule comprenant les étapes de réduire les émissions de NOₓ de véhicule tel que revendiqué dans la revendication 1 **caractérisé en ce que** le procédé comprend les étapes supplémentaires de :
(d) stocker la solution de nitrate métallique alcalinoterreux (M(NO₃)₂₍ₛₒₗ₎) dans un dispositif de stockage embarqué ; et
(e) laver le nitrate métallique alcalinoterreux (M(NO₃)₂) du dispositif de stockage embarqué jusque dans un dispositif de stockage secondaire extra-véhiculaire (68).

3. Un procédé de traitement des émissions de NOₓ de véhicule tel que revendiqué dans la revendication 2 où le procédé inclut l'étape supplémentaire d'évaporer l'eau du nitrate métallique alcalinoterreux aqueux (M(NO_{3)2(aq)}) stocké dans le dispositif de stockage secondaire extra-véhiculaire (68).

4. Un système de traitement de polluants de véhicule comprenant un catalyseur d'oxydation diesel (25), un filtre à particules (27), et un dispositif piège à NOₓ (20) comprenant un catalyseur métallique alcalinoterreux (M) comprenant un mélange de calcium et de magnésium, **caractérisé en ce que** le dispositif piège à NOₓ (20) est situé en aval du catalyseur d'oxydation diesel (25) dans la section froide de la ligne d'échappement et est adapté pour permettre la condensation d'eau de combustion au cours d'opérations en phase froide de telle sorte que le nitrate métallique (M(NO₃)₂) soit dissous dans l'eau de combustion pour une évacuation ou un stockage ultérieur.

5. Le système de traitement de polluants de véhicule tel que revendiqué dans la revendication 4 où le dispositif piège à NOₓ est situé après le silencieux.

6. Un système de traitement de polluants de véhicule tel que revendiqué dans la revendication 4 ou la revendication 5 où le catalyseur métallique alcalinoterreux (M) contient du zinc ou de l'étain ou d'autres éléments de transition d ou f.

7. Un système de traitement de polluants de véhicule tel que revendiqué dans n'importe lesquelles des revendications 4 à 6 où le catalyseur métallique alcalinoterreux (M) est déposé sur une structure support (42).

8. Un système de traitement de polluants de véhicule tel que revendiqué dans n'importe lesquelles des revendications 4 à 6 où le catalyseur métallique alcalinoterreux (M) est fourni dans une structure en nid d'abeilles.

9. Un système de traitement de polluants de véhicule tel que revendiqué dans n'importe lesquelles des revendications 4 à 8 où le catalyseur métallique alcalinoterreux (M) est fourni dans une structure en nid d'abeilles comprenant un support métallique.

10. Un système de traitement de polluants de véhicule tel que revendiqué dans n'importe lesquelles des revendications 4 à 9 où le dispositif piège à NOₓ de véhicule (20) contient un réservoir re-remplissable (40) du catalyseur métallique alcalinoterreux (M), et où le réservoir re-remplissable (40) est rempli de grains ou d'une formulation semblable à une pâte du catalyseur métallique alcalinoterreux (M), et où la formulation de catalyseur métallique alcalinoterreux (M) contient de manière additionnelle un liant et un modificateur de texture, où le modificateur de texture inclut des argiles, alumine, silice colloïdale et alumine colloïdale.

11. Un système de traitement de polluants de véhicule tel que revendiqué dans la revendication 10 où les argiles incluent la bentonite, la sépiolite, ou la montmorillonite soit seule, soit en combinaison.

12. Un système de traitement de polluants de véhicule tel que revendiqué dans n'importe laquelle des revendications 4 à 11 comprenant un dispositif de stockage embarqué raccordable au dispositif piège à NOₓ (20) et un dispositif de stockage extra-véhiculaire (68).

13. Un système de traitement de polluants de véhicule tel que revendiqué dans la revendication 12 où le dispositif de stockage embarqué stocke une solution de nitrate métallique alcalinoterreux (M(NO₃)₂₍ₛₒₗ₎ formée dans le dispositif piège à NOₓ de véhicule (20).

14. Un système de traitement de polluants de véhicule tel que revendiqué dans la revendication 12 ou la revendication 13 où le dispositif de stockage embarqué est disposé sous le dispositif piège à NOₓ (20) et au niveau d'une extrémité du dispositif piège à NOₓ (20).

15. Un système de traitement de polluants de véhicule tel que revendiqué dans n'importe lesquelles des revendications 12 à 14 où le dispositif de stockage secondaire extra-véhiculaire (68) est pourvu d'un système de ventilation afin de faciliter l'évaporation du liquide des eaux de lavage du nitrate métallique alcalinoterreux (M(NO₃)_{2(aq)}) stockées dans celui-ci.
